# EUROPEAN PATENT APPLICATION

(11) **EP 0 925 811 A1**
(43) Date of publication of application: **30.06.1999**
(21) Application number: 98310577.6
(22) Date of filing: 22.12.1998
(51) Int. Cl.: A63B 53/12

(54) **Shafts**

(30) Priority: 24.12.1997 GB 9727158
(71) Applicant: Apollo Sports Holdings Ltd., Swindon SN1 3HD (GB)
(72) Inventor: The designation of the inventor has not yet been filed
(74) Representative: Carpenter, David

(57) **Abstract**

A shaft for an item of sporting equipment, the shaft being formed from metal, being elongate, hollow, and of generally circular cross-section, and, the shaft containing an insert (15) and being characterised in that the insert (15) is a foamed synthetic resin material and is in intimate contact with the inner surface of the shaft.

The invention further resides in methods of introducing an insert into a predetermined location within a shaft.

## Description

This invention relates to shafts for sporting equipment, primarily but not exclusively golf clubs.

It is recognised that the shafts of golf clubs are susceptible to vibration in use, primarily as a result of the head of the golf club striking the golf ball. U.S. Patent 2,023,131 acknowledges this susceptibility and proposes to minimise the effect felt by a player, when the club head strikes an obstruction, by wedging one or more resilient plugs in the interior of the shaft. It is unclear how the plugs modify the vibration of the shaft but it may be that the plugs significantly alter the shaft mass in the region of nodal points of the shaft to the detriment of the weight of the shaft. Moreover fitting of such plugs accurately in the shaft is problematic given their substantial nature and the taper angle of the shaft, and it is an object of the present invention to provide an improved shaft, and methods of manufacturing a shaft in which such vibration is damped to minimise the sound and/or feel effects generated by the vibration.

In accordance with the present invention there is provided a shaft for an item of sporting equipment, the shaft being formed from metal, being elongate, hollow, and of generally circular cross-section, and, the shaft containing an insert of a foamed synthetic resin material, the insert being in intimate contact with the inner surface of the shaft.

Preferably the insert is a closed cell foamed synthetic resin material.

Desirably said insert is a closed cell polyethylene foam material.

Conveniently the intimate contact between the insert and the inner wall of the shaft is achieved by adhesively bonding the outer surface of the insert to the inner surface of the shaft.

Conveniently an elongate insert occupies a majority of the length of the interior of the shaft.

Desirably said elongate insert is formed from a number of individual inserts positioned axially abutting one another or in close juxtaposition to one another.

The invention further resides in a method of manufacturing a shaft for an item of sporting equipment, the method including the steps of introducing an insert into the hollow shaft at one end of the shaft and driving the insert along the shaft to a predetermined location within the shaft by the application of gas pressure behind the insert.

Desirably a removable abutment is introduced into the shaft from the opposite end thereof to define a stop against which the insert locates in its movement along the length of the shaft, to position the insert in its predetermined axial location within the shaft.

In an alternative method of manufacturing a shaft for an item of sporting equipment an insert is held compressed within an applicator tube, the applicator tube is introduced into a hollow shaft from one end thereof so that the end of the applicator tube is at a predetermined axial location within the shaft, and the compressed insert is displaced from the applicator tube into the shaft where it expands through its own inherent resilience to engage the inner surface of the shaft at the predetermined axial location.

In a further alternative method of a shaft for an item of sporting equipment an insert is extruded in a flowable form into the interior of a hollow shaft at a predetermined axial location, and cures at that location to define the insert.

One example of the invention is illustrated in the accompanying drawings wherein:
Figure 1 is a side elevational view of a shaft for a golf club,
Figure 2 is a view similar to Figure 1 illustrating part of the shaft in section to reveal the insert therein,
Figure 3 is a side elevational view of an insert,
Figure 4 is an end view of the insert,
Figures 5, 6, and 7 are enlarged cross sectional views of part of a shaft and illustrate three alternative manufacturing techniques, and,
Figures 8 and 9 are views similar to Figure 2 illustrating two possible modifications.

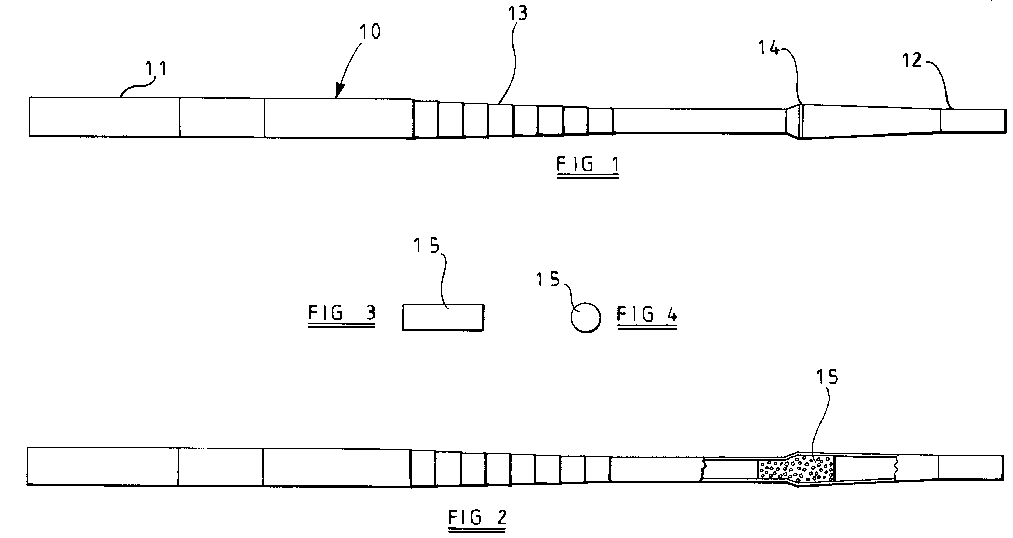

Referring to the drawings, the golf club shaft 10 illustrated in Figure 1 is formed from steel tube of circular cross-section, and has a butt end region 11 which in use receives a golf club grip, and, at its opposite end, a tip region 12 which in use receives the head of the golf club. The shaft 10 is of circular cross-section throughout the whole of its length, and intermediate the butt and tip regions the shaft has a central region 13 the diameter of which reduces progressively towards the tip region 12 in a series of parallel steps. Intermediate the end of the region 13 and the tip region 12 the shaft includes an expanded region 14 which includes a sharp increase in diameter followed by a gradual taper down to the diameter of the tip region 12. The tube is a thin walled tube throughout its length, although the wall thickness does vary along the length of the shaft.

The overall length of the shaft illustrated in Figure 1 is 39 inches and it should be noted that the tip and/or butt regions will be cut to adapt the shaft to produce a particular golf club within the known range of clubs in a set of clubs.

The profile of the shaft illustrated in Figure 1 is as follows. At the butt end, the first six inches has an external diameter of 0.580 inches. The next 3.38 inches of the length has a diameter of 0.575 inches followed by a 6 inch region of 0.570 inch diameter. The central region 13 consists of 8 steps each of one inch length and diminishing in diameter such that the steps are respectively 0.550, 0.530, 0.510, 0.490, 0.470, 0.450, 0.430, and 0.415 inches in diameter. Next there is a 7 inch region of 0.400 inch diameter followed by a steeply outwardly tapering region of one half inch length and increasing from 0.400 inches in diameter to 0.505 inches in diameter. There is then a very short section, approximately 0.13 inches in length where the diameter of 0.505 inches is maintained and thereafter there is a more gently tapering region 5.5 inches of length which tapers evenly from 0.505 inches in diameter down to 0.380 inches in diameter. Finally the tip region is 2.5 inches in length and 0.380 inches in diameter.

The wall thickness of the shaft is not represented in the drawings, but for example the 7 inch region of 0.400 inches is external diameter will have a wall thickness of approximately 18 thousandths of an inch whereas the 5.5 inch gently tapering section adjacent the tip region 12 will have a wall thickness of approximately 15 thousandths of an inch increasing to 24 thousandths of an inch within the final 2.5 inches of the tip region.

Golf club shafts of this profile have been incorporated into sets of golf clubs, and certain vibration effects, possibly attributable to the region 14 of the shaft, have been noted. It is believed that the vibrations are a high order harmonic generated by 'ringing' in the region 14. The primary effect noted is an audible one, and in order to prevent this the shaft is provided with an insert 15.

The insert 15 is in the form of an elongate element formed from a closed cell polyethylene foam. The element is 3 inches in length, and is of circular cross-section having a diameter of 0.500 inches. The foam is relatively dense, having sufficient inherent resilience that after compression the insert will tend to restore to its original configuration and, when introduced into the shaft, in a region of the shaft of internal diameter less than the natural external diameter of the insert, the insert will expand to bear against the inner surface of the shaft around its circumference.

It will be noted that at the butt end of the shaft the external diameter is 0.580 inches, and given the relatively thin wall thickness of the shaft the internal diameter of the butt end of the shaft will be closely similar to the external diameter of the insert 15 in its rest condition such that the insert can be introduced easily into the butt end of the shaft.

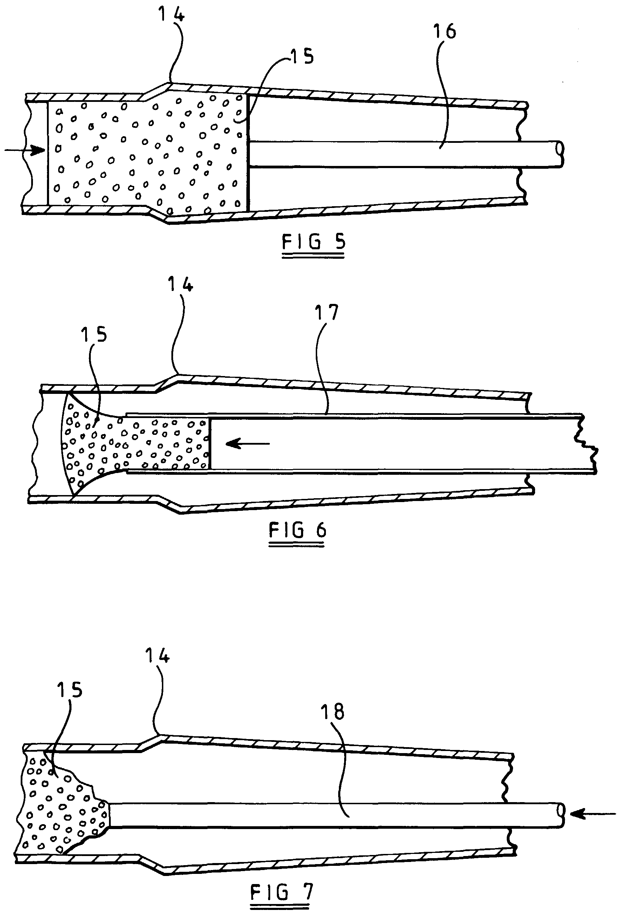

It is intended that the insert shall fit in the region 14 of the shaft and in order to position the insert correctly within the shaft an abutment member 16 (Figure 5) in the form of a rod of predetermined length, and of external diameter less than the minimum internal diameter of the tip region 12 of the shaft, is introduced into the shaft from the tip region. The length of the rod within the shaft is 6.75 inches so that the end of the rod lies part way along the gently tapering region of 5.5 inches in length where the region 14 tapers down to the diameter of the tip region 12. The insert 15 is then driven along the interior of the shaft in any convenient manner until the insert abuts the end of the rod 16 whereupon the position of the insert within the shaft is as desired. Thereafter the rod is withdrawn from the tip end 12 of the shaft and the shaft is ready for incorporation into a golf club.

A convenient means of driving the insert along the length of the shaft to its desired position is the application of air pressure behind the insert so that the insert is driven along the shaft in the manner of a bullet along a rifle barrel. It will be recognised that as the insert progresses along the shaft from the butt end the diameter of the shaft is decreasing, and thus the compression of the insert is increasing. However, when the insert reaches the predetermined location it can expand, along part of its length, within the increased diameter in the region 14. The internal diameter of the region 14 is of course less than the external diameter of the insert in its rest condition and thus the insert firmly grips the interior of the shaft such that the surface of the insert is in intimate contact and frictional engagement with the inner surface of the shaft.

The intimate engagement of the insert with the shaft ensures that the insert will not move from its predetermined position within the shaft, and that vibration of the shaft is transmitted to the insert, to be damped by the insert.

In a modification the intimate contact of the insert with the inner surface of the shaft is enhanced by the use of an adhesive. The adhesive, in liquid form, is applied to the insert prior to introduction of the insert into the butt end of the shaft and the liquid adhesive acts as a lubricant as the insert is driven along the length of the shaft. Sufficient adhesive remains on the exterior of the insert, at the time when the insert reaches its predetermined location, to adhesively bond the insert to the inner surface of the shaft. A suitable adhesive, which remains liquid for a sufficient length of time to allow for positioning of the insert within the shaft, is a rubber solution.

In an alternative manufacturing method (Figure 6) the insert 15 is compressed into a tubular applicator 17 the external diameter of which is less than the internal diameter of the shaft. The applicator is then introduced into the shaft through a predetermined distance so that the tip of the applicator is adjacent the desired location of the insert.

The insert is then ejected from the applicator in any convenient manner, for example by being displaced by mechanical action, and thus occupies the predetermined location within the shaft. The insert will of course then restore under its own inherent resilience to grip the interior of the shaft. Again, the applicator can be arranged if desired to coat the insert within an adhesive as the insert is expelled from the applicator into the shaft.

In a still further alternative manufacturing method (Figure 7) the insert 15 is actually formed within the shaft by injecting the foaming material from a supply pipe 18 at a predetermined location within the shaft. The liquid foaming material foams virtually instantaneously within the predetermined location in the shaft to define the insert which then cures in situ and bonds, or otherwise intimately engages the interior surface of the shaft.

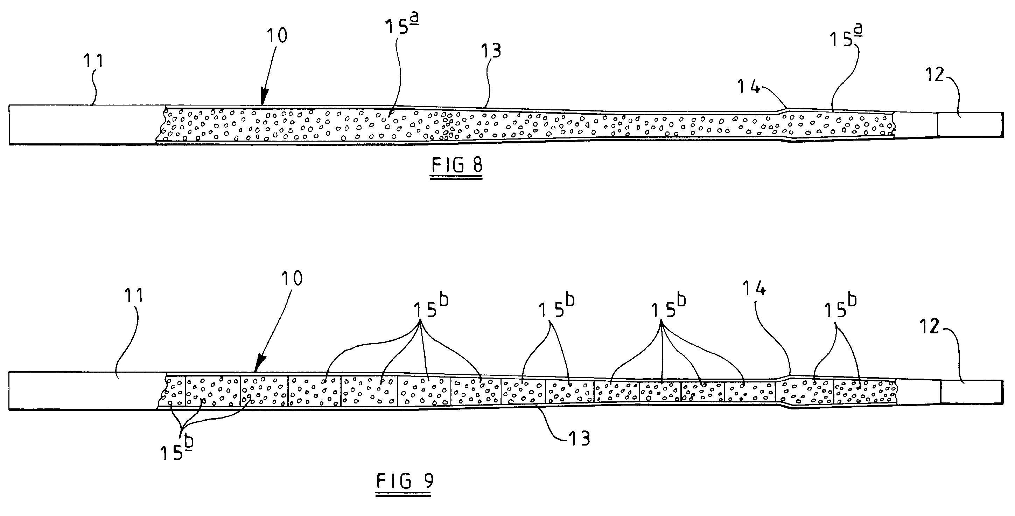

It will be recognised that the invention is not restricted to the use of a closed cell polyurethane foam, and other closed cell foam materials may well prove suitable for introduction into the shaft to damp vibration thereof. Moreover, it is believed that certain open cell foamed material would also perform in a similar manner. Furthermore, the invention is not restricted to the use of a single insert at a predetermined location within the shaft. Clearly two or more inserts can be introduced into the shaft at predetermined locations, and the inserts can be axially spaced from one another, or can be in close juxtaposition if necessary. As a still further alternative (Figure 8) the whole, or substantially the whole of the shaft might be filled with insert material 15a either by injecting the material into the shaft, or by introducing an insert as a unitary construction, appropriately tapered, or alternatively by introducing a plurality of individual elements 15b, of different diameters, and driving them to appropriate locations along the length of the shaft so that they abut, or are in close juxtaposition (Figure 9).

It will further be recognised that the invention is not limited to golf club shafts of the type illustrated in Figure 1 having an expanded region 14. The invention can find use in other forms of golf club shaft, and may also find use in shafts for other items of sporting equipment, for example ski poles.

## Claims

1. A shaft for an item of sporting equipment, the shaft being formed from metal, being elongate, hollow, and of generally circular cross-section, and, the shaft containing an insert (15) and being characterised in that the insert (15) is a foamed synthetic resin material and is in intimate contact with the inner surface of the shaft.

2. A shaft as claimed in Claim 1, characterised in that the insert is a closed cell foamed synthetic resin material.

3. A shaft as claimed in Claim 1, characterised in that said insert is a closed cell polyethylene foam material.

4. A shaft as claimed in Claim 1, characterised in that the intimate contact between the insert and the inner wall of the shaft is achieved by adhesively bonding the outer surface of the insert to the inner surface of the shaft.

5. A shaft as claimed in Claim 1, characterised in that the insert is elongate and occupies a majority of the length of the interior of the shaft.

6. A shaft as claimed in Claim 5, characterised in that said elongate insert is formed from a number of individual inserts positioned axially abutting one another or in close juxtaposition to one another.

7. A method of manufacturing a shaft for an item of sporting equipment, characterised by including the steps of introducing an insert (15) into a hollow shaft (10) at one end of the shaft and driving the insert along the shaft to a predetermined location within the shaft by the application of gas pressure behind the insert.

8. A method as claimed in Claim 6, characterised by the introduction of a removable abutment into the shaft from an opposite end thereof to define a stop against which the insert locates in its movement along the length of the shaft, to position the insert in its predetermined axial location within the shaft.

9. A method of manufacturing a shaft for an item of sporting equipment characterised by comprising providing an insert compressed within an applicator tube introducing the applicator tube into a hollow shaft from one end thereof so that the end of the applicator tube is at a predetermined axial location within the shaft, and displacing the compressed insert from the applicator tube into the shaft where it expands through its own inherent resilience to engage the inner surface of the shaft at said predetermined axial location.

10. A method of manufacturing a shaft for an item of sporting equipment characterised by extruding an insert in a flowable form into the interior of a shaft at a predetermined axial location, and causing or allowing the insert material to cure at said location to define the insert.

11. A method of manufacturing a shaft for an item of sporting equipment as claimed in any one of Claims 7 to 10, characterised in that the insert is formed from a closed cell foamed synthetic resin material.
